# DEMANDE DE BREVET EUROPEEN

(11) **EP 1 338 370 A2**
(43) Date de publication de la demande: **27.08.2003**
(21) Numéro de dépôt: 03290089.6
(22) Date de dépôt: 14.01.2003
(51) Int. Cl.: B23K 9/133

(54) **Platine de dévidage de fil de soudage a galets coniques**

(30) Priorité: 18.02.2002 FR 0202019
(71) Demandeur: LA SOUDURE AUTOGENE FRANCAISE, F-75321 Paris Cedex 07 (FR)
(72) Inventeur: Chasse, Didier, 60126 Longueil Sainte Marie (FR); Couderc, Patrick, 60800 Crepy en Valois (FR)
(74) Mandataire: Pittis, Olivier

(57) **Abrégé**

Une platine de dévidage de fil de soudage dont les moyens d'entraînement du fil comprennent des galets d'entraînement rotatifs de forme conique sur lesquels s'exerce un effort de pression perpendiculaire à l'axe de rotation des galets. Dévidoir de fil de soudage équipé d'une telle platine. Utilisation d'un tel dévidoir ou d'une telle platine en soudage à l'arc avec fil fusible.

## Description

La présente invention concerne une platine de dévidage de fil de soudage dont les moyens d'entraînement du fil comprennent des galets rotatifs de forme conique sur lesquels s'exerce un effort de pression perpendiculaire à l'axe de rotation des galets, ainsi qu'un système de dévidage de fil ou dévidoir de fil équipé d'une telle platine.

Lorsqu'on réalise une soudure avec une torche alimentée en fil de soudage, encore appelé fil ou électrode fusible, on utilise habituellement un système d'alimentation en fil, encore appelé système de dévidage, comprenant une platine de dévidage de fil de soudage munie de moyens d'entraînement du fil qui permettent d'entraîner le fil dans le sens allant de la réserve de fil, par exemple une bobine de fil de soudage, vers la torche de soudage où il est fondu grâce à l'énergie d'un arc électrique.

Les moyens d'entraînement du fil comprennent généralement des galets d'entraînement mobiles en rotation autour de leur axe, à savoir typiquement un galet moteur servant à entraîner le fil, c'est-à-dire à exercer un effort de traction sur le fil, et un galet presseur dont la fonction est de venir appuyer sur le fil de manière à exercer sur celui-ci un effort tendant à le maintenir au contact du galet moteur, c'est-à-dire que tes galets moteur et presseur se font face et coopèrent l'un avec l'autre pour amener le fil.

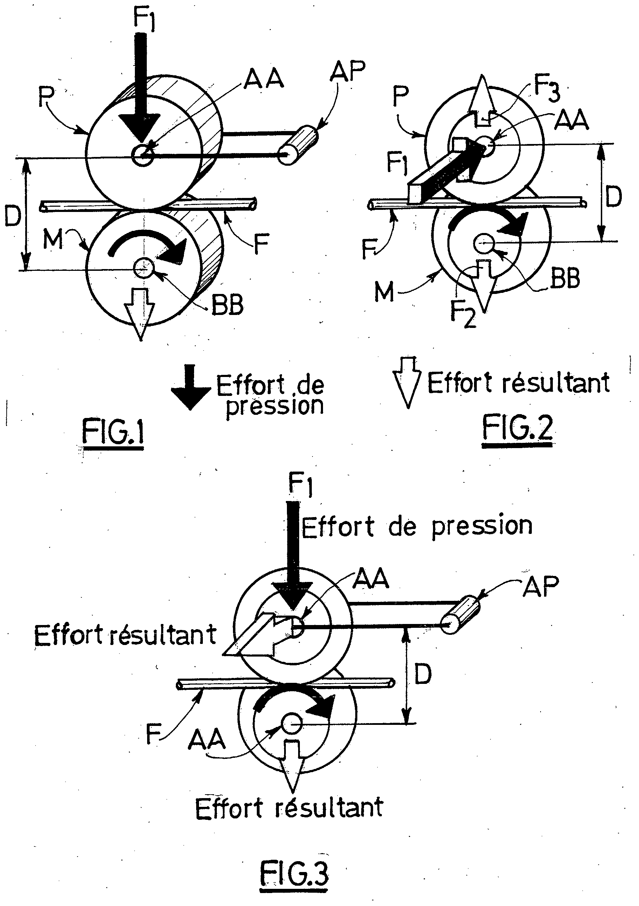

La plupart des systèmes de dévidage actuels utilise des galets d'entraînement rotatifs de forme cylindrique, comme schématisé en figure 1, car ils offrent une très grande facilité de réalisation et de mise en oeuvre des platines.

En effet, comme on le voit sur la figure 1, la forme cylindrique des galets permet une répartition simplifiée des forces ou efforts de pression nécessaires à l'entraînement du fil puisque tout l'effort de pression est appliqué (flèche F1) perpendiculairement à l'axe (AA) du galet presseur (P), transmis au fil (F), puis repris par l'axe (BB) du galet moteur (M).

Avec des galets de forme cylindrique, il n'existe aucune résultante de l'effort de pression de direction axiale au galet presseur et il est donc possible de concevoir des systèmes simples permettant un dégagement et un démontage aisés des galets en vue de leur remplacement ou en vue du remplacement des autres pièces d'usure de la platine.

Toutefois, les platines à galets de forme cylindrique présentent notamment les inconvénients de devoir utiliser des galets de diamètres différents pour dévider des fils de diamètres différents et de devoir introduire le fil d'apport en relâchant la pression qui s'exerce sur les galets, ce qui n'est pas pratique pour l'utilisateur.

De là, il a été proposé des platines de dévidage à galets rotatifs de forme conique ne présentant pas ces inconvénients grâce à la forme conique des galets ; cette architecture est schématisée sur la figure 2.

En outre, les platines de dévidage utilisant des galets coniques permettent aussi l'avantage de garantir une reprise parfaite des efforts de pression (flèche F1) en dirigeant les forces ou efforts résultants (flèches F2 et F3) sur un axe perpendiculaire aux axes de rotation des galets rotatifs coniques.

Cependant, un des inconvénients des platines à galets coniques est leur architecture qui impose l'utilisation d'une force ou d'un effort de pression (flèche F1) coaxial avec l'axe de rotation (AA) du galet presseur (P), comme montré sur la figure 2.

De plus, utiliser des galets coniques présente le désavantage de figer la géométrie ou l'architecture de la platine et surtout la distance (D) entre les axes (AA) et (BB) de rotation des galets presseur (P) et moteur (M), respectivement.

Il s'ensuit que les platines de dévidage utilisant des galets coniques sont actuellement peu utilisées au plan industriel et ce, de par la complexité de leur système de réglage de pression et du remplacement peu aisé des pièces d'usure par l'utilisateur nécessitant l'utilisation d'outils de démontage spécifiques.

Le problème qui se pose alors est de proposer une platine de dévidage de fil de soudage améliorée, c'est-à-dire qui ne présente ni les inconvénients des dispositifs à galets cylindriques, ni ceux des dispositifs à galets coniques, ainsi qu'un dévidoir de fil équipé d'une telle platine dévidage.

En d'autres termes, le but de l'invention est de proposer une platine de dévidage de fil de soudage et un dévidoir de fil équipé d'une telle platine qui :
- présentent les mêmes potentialités et avantages que les platines à galets cylindriques tout en conservant les avantages des platines à galets coniques ;
- permettent un dégagement ou un démontage rapide des galets, c'est-à-dire utilisation sans outil, en vue du remplacement des pièces d'usure, et sans perte du réglage de pression ;
- conduisent à un réglage et une visualisation aisé et immédiate de la pression des galets ;
- permettent l'utilisation d'un seul type de galets pour dévider des fils de diamètre différent ;
- permettent d'introduire le fil d'apport entre les galets sans relâcher la pression s'exerçant sur les galets ; et
- permettent d'utiliser une plaque de protection des engrenages afin d'interdire tout risque d'écrasement pour l'opérateur.

La solution de la présente invention est alors une platine de dévidage de fil de soudage dont les moyens d'entraînement du fil comprennent des galets (M, P) rotatifs de forme conique agencés en vis-à-vis l'un par rapport à l'autre de manière à venir exercer chacun un contact mécanique sur la surface externe du fil de soudage lorsque ledit fil est inséré entre lesdits galets (M, P), lesdits galets (M, P) comprenant :
. au moins un galet moteur (M), mobile en rotation autour d'un axe (BB), pour entraîner mécaniquement le fil (F) de soudage selon un mouvement de translation, et
. au moins un galet presseur (P) ), mobile en rotation autour d'un axe (AA) sensiblement parallèle à l'axe (BB), pour exercer une pression mécanique sur la surface externe du fil (F), dans une direction tendant à le rapprocher du galet moteur (M), de manière à maintenir ledit fil au contact du galet moteur (M),
caractérisée en ce qu'elle comporte des moyens d'application de pression (AP) coopérant avec au moins un galet presseur (P) de manière à exercer au moins une force de pression (F1) sur ledit galet presseur (P) perpendiculaire à l'axe de rotation (AA) dudit galet presseur (P).

Selon le cas, la platine de l'invention peut comprendre l'une ou plusieurs des caractéristiques techniques suivantes :
- la distance séparant l'axe (AA) du galet presseur de l'axe (BB) du galet moteur est ajustable en fonction du diamètre du fil.
- elle comporte des moyens de mise en mouvement de galet permettant de conférer un mouvement de rotation autour de son axe à au moins l'un des galets, de préférence selon son axe (BB) du galet moteur.
- les moyens de mise en mouvement de galet comprennent un moteur électrique coopérant avec un ou plusieurs engrenages et/ou un ou plusieurs axes d'entraînement.
- les moyens d'application de pression exercent une force de pression (F1) s'appliquant sur l'axe (AA) du galet presseur.
- le galet presseur comprend au moins un essieu d'axe (AA) et en ce que les moyens d'application de pression exercent une force de pression (F1) s'appliquant sur au moins deux points situés sur l'axe (AA) de l'essieu du galet presseur, et de part et d'autre dudit galet presseur.
- les moyens d'application de pression coopèrent un système de verrouillage permettant d'ajuster la force de pression (F1) et/ou de maintenir le galet presseur en position au contact du fil.
- au moins un galet presseur est porté par une structure-support mobile en pivotement autour d'un axe (CC), de préférence la structure-support portant le galet presseur est un carter ou un élément en forme de bride.
- elle comporte deux galets moteur associés à deux galets presseur qui leur font face.
- les moyens d'application de pression comprennent un carter pivotant autour d'un axe (CC), de préférence parallèle à l'axe (AA), ledit carter portant le galet presseur.
- le système de verrouillage comprend une pièce pivotante apte à pivoter autour d'un axe (DD) de pivotement, ladite pièce pivotante portant une partie rotative actionnable en rotation par l'opérateur.
- ladite pièce pivotante portant la partie rotative est apte à coopérer avec un évidemment aménagé dans le carter pour permettre d'ajuster la force de pression (F1) et/ou de maintenir le galet presseur en position au contact du fil.
- les galets sont en un matériau de type métal ou alliage métallique résistant à l'usure.
- les galets ont un diamètre compris entre 25 et 50 mm.

L'invention porte aussi sur un dispositif de dévidage de fil de soudage comportant une platine selon l'invention, en particulier un dévidoir de fil de soudage, et sur l'utilisation d'un tel dispositif ou d'une telle platine dans une opération de soudage à l'arc électrique, en particulier en soudage MIG/MAG ou analogue.

L'invention va être mieux comprise grâce aux explications données ci-après en références aux figures annexées parmi lesquelles :
- la figure 1 est un schéma, en vue de côté, du principe de principe du fonctionnement d'un système de dévidage de l'art antérieur utilisant des galets de forme cylindrique et effort de pression s'exerçant perpendiculairement à l'axe de rotation des galets, comme expliqué ci-dessus ;
- la figure 2 est un schéma, en vue de côté, du principe de fonctionnement d'un système de dévidage de l'art antérieur utilisant des galets de forme conique et effort de pression s'exerçant coaxialement à l'axe de rotation des galets, comme expliqué ci-avant ;
- la figure 3 est un schéma, en vue de côté, du principe de fonctionnement d'un système de dévidage selon l'invention utilisant des galets de forme conique mais avec effort de pression s'exerçant perpendiculairement à l'axe de rotation des galets ;
- la figure 4 est un schéma, en vue de face, de la figure 3 ;
- la figure 5 représente un exemple d'une platine conforme à l'invention en position fermée ; et
- la figure 6 représente la platine de la figure 5 en position ouverte.

Une comparaison des figures 1 et 2 permet de bien comprendre le principe de fonctionnement des platines de dévidage de l'art antérieur en ce qui concerne, d'une part, la forme des galets et, d'autre part, de la répartition des efforts ou forces différentes qui s'exercent selon que les galets sont cylindriques ou coniques, comme expliqué ci-avant.

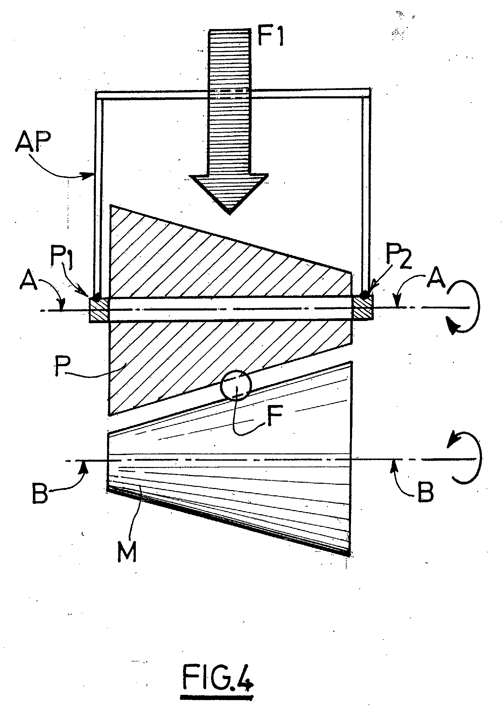

Par ailleurs, les figures 3 et 4 montrent clairement les répartition des efforts résultants pour une platine à galets coniques avec effort de pression perpendiculaire à l'axe de rotation des galets selon l'invention, laquelle comprend un mécanisme permettant d'appliquer un effort de pression perpendiculaire à l'axe de rotation (AA) et (BB) des galets P et M ; une chape de fixation AP du galet presseur P renforcée apte à la reprise des efforts axiaux résultants ; et un mécanisme permettant de faire varier, c'est-à-dire d'ajuster, la distance D entre les axes (AA) et (BB) des galets presseur P et moteur M.

Selon l'invention, la platine de dévidage est munie de moyens d'entraînement du fil, en particulier de galets rotatifs M, P de forme conique qui sont agencés en vis-à-vis l'un par rapport à l'autre, c'est-à-dire se faisant face l'un à l'autre comme montré sur les figures 3 et 4, de sorte qu'ils puissent venir exercer l'un et l'autre un contact mécanique sur la surface externe du fil de soudage lorsque ledit fil F est inséré, c'est-à-dire pris en sandwich entre ces galets M, P.

Le galet moteur M est mobile en rotation autour de son axe (BB) et sert à entraîner mécaniquement et en translation le fil F de soudage dans le but d'alimenter une torche de soudage avec le fil F. Ce galet moteur M est lui-même entraîné en rotation autour de son axe (BB) par des moyens de mise en mouvement MM ou d'entraînement de galets classiques comportant des engrenages et des axes formant réducteur, et un moteur électrique, par exemple le moteur appelé *Wire Drive Motor* disponible auprès de FHP Motor AB.

Par ailleurs, le galet presseur P qui est mobile en rotation autour de son axe (AA) sert uniquement à venir exercer une pression mécanique sur la surface externe du fil, dans une direction tendant à rapprocher le fil du galet moteur M, de manière à le maintenir au contact du galet moteur M pour qu'il puisse être efficacement et correctement entraîné en translation grâce au mouvement de rotation qui anime le galet moteur M.

La fonction du galet moteur M est d'entraîner le fil F, alors que celle du galet presseur P est d'aller exercer sur celui-ci une force mécanique destinée à le maintenir au contact du galet moteur M.

Selon l'invention, des moyens d'application de pression AP, tel un mécanisme adapté, coopérant avec le galet presseur P permettent d'assurer l'exercice d'une force de pression F1 sur le galet presseur P selon une direction perpendiculaire à l'axe de rotation (AA) du galet presseur P. Cet agencement est avantageux car il permet de remplacer facilement les pièces usées, à savoir les galets, les engrenages, le guide-fil ... qui sont progressivement détériorés notamment par le passage du fil F de soudage et les frottements qui en découlent.

Par ailleurs, des moyens de modification de distance permettent d'ajuster ou de régler la distance D séparant l'axe (AA) du galet presseur P de l'axe (BB) du galet moteur M en fonction du diamètre du fil qui traverse la platine de dévidage. Ceci est particulièrement avantageux car puisqu'il est possible d'adapter l'écartement entre les galets en fonction du diamètre du fil à entraîner, on va pouvoir utiliser des mêmes galets lorsque le diamètre du fil varie, c'est-à-dire ne pas avoir à changer les galets lorsqu'on passera d'un fil de diamètre donné à un fil de diamètre différent, c'est-à-dire supérieur ou inférieur.

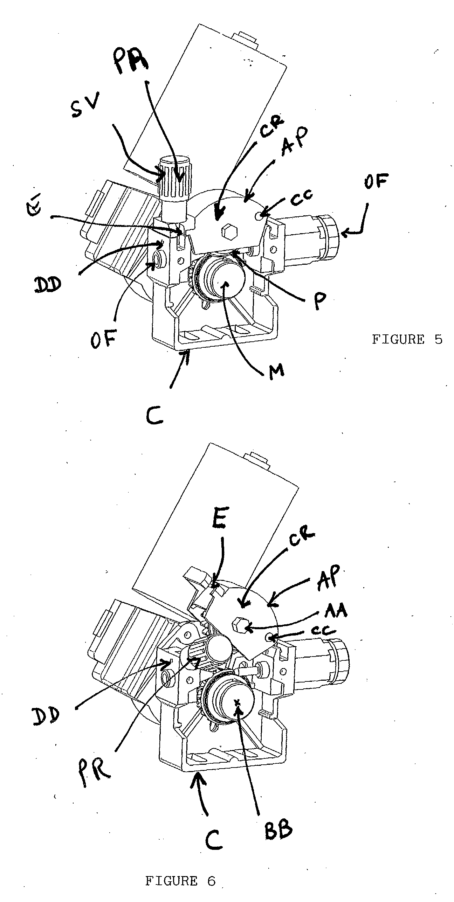

La figure 5 représente un exemple d'une platine conforme à l'invention en position fermée.

Celle-ci se compose d'un capotage C externe dans lequel sont agencés les galets moteur M et presseur P. Le capotage C comprend deux orifices de fil OF permettant au fil d'entrer dans le capotage C puis d'en ressortir ensuite en étant soumis au mouvement de translation que lui confère le galet moteur M.

Le galet presseur P est aménagé dans une structure-support mobile en pivotement autour d'un axe CC, ladite structure-support mobile formant un carter CR de protection autour du galet presseur P.

Le carter CR étant pivotant, l'introduction du fil entre les galets M, P est facilité puisqu'il suffit de faire pivoter le carter CR portant le galet presseur P dans un sens tendant à l'éloigner du galet moteur M (comme montré sur la figure 6) pour augmenter la distance D séparant les galets M, P, donc permettre à l'opérateur de réaliser un positionnement plus aisé du fil entre lesdits galets M et P. Une fois le fil positionné, un pivotement en sens inverse du carter CR va permettre au galet presseur P de se rapprocher du galet moteur M en venant au contact du fil et en y exerçant une pression comme expliqué ci-dessus.

Pour dégager le fil d'entre les galets M, P, il suffit de procéder de manière inverse.

Toutefois, pour permettre de maintenir le carter C en position stable et solidaire de la platine, lorsque le fil a été correctement positionné entre les galets M, P et que le carter CR a été rabattu (comme montré sur la figure 5), il est nécessaire de prévoir un système de verrouillage SV coopérant avec le carter CR et le capotage C.

Le système de verrouillage SV comporte une pièce pivotante autour d'un axe DD porté par le capotage C, laquelle est munie d'une partie rotative PR actionnable par l'opérateur de manière à obtenir un déplacement en translation de ladite partie rotative PR, en rapprochement ou en éloignement par rapport à l'axe (DD) de pivotement selon le sens du vissage exercé par l'opérateur sur celle-ci.

La partie rotative PR peut, par exemple, se déplacer en étant guidée par un filetage aménagé, directement ou indirectement, sur une des extrémités la pièce pivotante.

En outre, la partie rotative PR peut être par exemple une pièce à ressort de pression à réglage rotatif de pression.

La pièce pivotante et la partie rotative PR coopèrent avec un évidemment E aménagé dans le carter CR de la manière suivante :
- lorsque l'opérateur souhaite passer de la figure 5 à la figure 6, par exemple pour permettre d'insérer le fil F entre les galets M, P, il va exercer une action de dévissage sur la partie rotative PR, ce qui va permettre de libérer le carter CR qui est maintenu solidaire du capotage C par l'intermédiaire de la force de serrage qu'exerce le système de verrouillage SV sur ledit carter CR. En effet, comme on le voit en figure 5 (position frmée), la partie rotative PR agit normalement sur les bords de l'évidemment E du carter CR en y exerçant une force de pression tendant à maintenir le carter CR en contact solidaire du capotage C, c'est-à-dire à la manière d'un étau. Pour libérer le carter CR, l'opérateur va donc d'abord dévisser la partie rotative PR, ce qui lui permettra de dégager le système de verrouillage SV de l'évidemment E via un pivotement de la pièce pivotante oblongue portant la partie rotative PR, autour de son axe (DD) de manière à l'amener dans la configuration de la figure 6. Une fois libéré de l'action du système de verrouillage SV, le carter CR va pouvoir être pivoté pour écarter les galets M, P l'un de l'autre et ainsi faciliter le positionnement correct du fil entre ces galets M, P.
- à l'inverse, lorsque l'opérateur souhaitera repasser de la figure 6 à la figure 5, par exemple pour pouvoir utiliser la platine, après avoir inséré le fil F entre les galets M, P, il va alors d'abord rapprocher manuellement le carter CR du galet moteur M et positionner le galet presseur P au contact du fil. Ensuite, l'opérateur fera pivoter la pièce pivotante de manière à l'introduire dans l'évidemment E du carter CR, puis il revissera la partie rotative jusqu'au obtenir la force de serrage minimale souhaitée permettant, d'une part, de maintenir le carter CR solidaire du capotage C et, d'autre part, d'exercer la force de pression désirée venant s'exercer, via le galet presseur P, sur le fil de soudage pour maintenir ce dernier au contact du galet moteur M.

Dans le cas présent, les moyens d'application de pression AP, coopérant avec le galet presseur P et permettant d'assurer l'exercice d'une force de pression F1 sur le galet presseur P selon une direction perpendiculaire à l'axe de rotation (AA) du galet presseur P, comprennent l'ensemble formé par le carter CR et son évidemment E, lesdits moyens d'application de pression AP coopérant avec le système de verrouillage SV comprenant la pièce pivotante oblongue portant la pièce rotative PR et actionnable en pivotement autour de l'axe (DD).

L'invention permet de rendre compatible l'usage des platines à galets de type conique aux attentes des utilisateurs de poste de soudage avec amenée de fil d'apport automatique.

## Revendications

1. Platine de dévidage de fil de soudage dont les moyens d'entraînement du fil comprennent des galets (M, P) rotatifs de forme conique agencés en vis-à-vis l'un par rapport à l'autre de manière à venir exercer chacun un contact mécanique sur la surface externe du fil de soudage lorsque ledit fil est inséré entre lesdits galets (M, P), lesdits galets (M, P) comprenant :
. au moins un galet moteur (M), mobile en rotation autour d'un axe (BB), pour entraîner mécaniquement le fil (F) de soudage selon un mouvement de translation, et
. au moins un galet presseur (P), mobile en rotation autour d'un axe (AA) sensiblement parallèle à l'axe (BB), pour exercer une pression mécanique sur la surface externe du fil (F), dans une direction tendant à le rapprocher du galet moteur (M), de manière à maintenir ledit fil au contact du galet moteur (M),
**caractérisée en ce qu'**elle comporte des moyens d'application de pression (AP) coopérant avec au moins un galet presseur (P) de manière à exercer au moins une force de pression (F1) sur ledit galet presseur (P) perpendiculaire à l'axe de rotation (AA) dudit galet presseur (P).

2. Platine selon la revendication 1, **caractérisée en ce que** la distance (D) séparant l'axe (AA) du galet presseur (P) de l'axe (BB) du galet moteur (M) est ajustable en fonction du diamètre du fil.

3. Platine selon l'une des revendications 1 ou 2, **caractérisée en ce qu'**elle comporte des moyens de mise en mouvement de galet permettant de conférer un mouvement de rotation autour de son axe à au moins l'un des galets, de préférence selon son axe (BB) du galet moteur (M).

4. Platine selon l'une des revendications 1 à 3, **caractérisée en ce que** les moyens de mise en mouvement de galet comprennent un moteur électrique coopérant avec un ou plusieurs engrenages et/ou un ou plusieurs axes d'entraînement.

5. Platine selon l'une des revendications 1 à 4, **caractérisée en ce que** les moyens d'application de pression (AP) exercent une force de pression (F1) s'appliquant sur l'axe (AA) du galet presseur (P).

6. Platine selon l'une des revendications 1 à 5, **caractérisée en ce que** le galet presseur (P) comprend au moins un essieu d'axe (AA) et **en ce que** les moyens d'application de pression (AP) exercent une force de pression (F1) s'appliquant sur au moins deux points (P1, P2) situés sur l'axe (AA) de l'essieu du galet presseur (P), et de part et d'autre dudit galet presseur (P).

7. Platine selon l'une des revendications 1 à 6, **caractérisée en ce que** les moyens d'application de pression (AP) coopèrent un système de verrouillage (SV) permettant d'ajuster la force de pression (F1) et/ou de maintenir le galet presseur (P) en position au contact du fil.

8. Platine selon l'une des revendications 1 à 7, **caractérisée en ce que** au moins un galet presseur (P) est porté par une structure support mobile en pivotement autour d'un axe (CC), de préférence la structure support portant le galet presseur (P) est un carter (CR).

9. Platine selon l'une des revendications 1 à 8, **caractérisée en ce qu'**elle comporte deux galets moteur (M) associés à deux galets presseur (P) qui leur font face.

10. Platine selon l'une des revendications 1 à 9, **caractérisée en ce que** les moyens d'application de pression (AP) comprennent un carter (CR) pivotant autour d'un axe (CC), de préférence parallèle à l'axe (AA), ledit carter (CR) portant le galet presseur (P).

11. Platine selon l'une des revendications 1 à 10, **caractérisée en ce que** le système de verrouillage (SV) comprend une pièce pivotante apte à pivoter autour d'un axe (DD) de pivotement, ladite pièce pivotante portant une partie rotative (PR) actionnable en rotation par l'opérateur.

12. Platine selon l'une des revendications 1 à 11, **caractérisée en ce que** ladite pièce pivotante portant la partie rotative (PR) est apte à coopérer avec un évidemment (E) aménagé dans le carter (CR) pour permettre d'ajuster la force de pression (F1) et/ou de maintenir le galet presseur (P) en position au contact du fil.

13. Dispositif de dévidage de fil de soudage comportant une platine selon l'une des revendications 1 à 12.

14. Utilisation d'un dispositif selon la revendication 13 ou d'une platine selon l'une des revendications 1 à 12 dans une opération de soudage à l'arc électrique.
